Europäisches Patentamt

European Patent Office

Office européen des brevets

(11) Veröffentlichungsnummer: **0 106 112**
**B1**

(12) # EUROPÄISCHE PATENTSCHRIFT

(45) Veröffentlichungstag der Patentschrift:
12.08.87

(21) Anmeldenummer: 83106797.8

(22) Anmeldetag: 07.09.83

(51) Int. Cl.⁴: **B 60 T 8/00**

(54) Antiblockierregelsystem.

(30) Priorität: 02.10.82 DE 3236534

(43) Veröffentlichungstag der Anmeldung:
25.04.84 Patentblatt 84/17

(45) Bekanntmachung des Hinweises auf die Patenterteilung:
12.08.87 Patentblatt 87/33

(84) Benannte Vertragsstaaten:
DE FR GB IT SE

(56) Entgegenhaltungen:
EP-A-0 051 801
DE-A-2 038 371
FR-A-2 207 827
US-A-3 610 362
US-A-3 741 043
US-A-4 262 783

(73) Patentinhaber: **ROBERT BOSCH GMBH, Postfach
50, D-7000 Stuttgart 1 (DE)**

(72) Erfinder: **Leiber, Heinz, Theodor- Heuss- Strasse 34,
D-7141 Oberriexingen (DE)**

EP 0 106 112 B1

## Beschreibung

Die Erfindung geht gemäß dem Oberbegriff des Anspruchs 1 aus von einem Antiblockierregelsystem für frontgetriebene Fahrzeuge mit einer Bremskreisaufteilung, bei der je ein Vorder- und ein Hinterrad in einen Bremskreis einbezogen sind, bei welchem Antiblockierregelsystem lediglich den Vorderrädern Meßwertgeber zur Überwachung des Radbewegungsverhaltens zugeordnet sind und bei dem durch eine Auswerteschaltung, der Signale der Meßwertgeber zugeführt werden, der Bremsdruck in den beiden Bremskreisen individuell in Abhängigkeit vom Raddrehverhalten des zugehörigen Vorderrades geregelt wird. Ein Antiblockierregelsystem mit Meßwertgebern lediglich an den Vorderrädern, die in gleicher Weise die Bremsdrücke in zwei Bremskreisen individuell regeln, ist durch DE-A1-2 038 371 bekannt.

Mit steigender Verbreitung von Antiblockierregelsystemen ist man bestrebt, den Aufwand solcher Systeme zu reduzieren und einfache Systeme einzusetzen. Bekanntlich ist es schwierig, die Hauptmerkmale eines solchen Systems, nämlich Lenkbarkeit, Fahrstabilität und Bremsweg durch weniger als drei Regelkanäle und individuelle Sensierung des Radgeschwindigkeitsverhaltens aller Räder zu erreichen. Für frontgetriebene Fahrzeuge mit diagonaler Bremskreisaufteilung existiert ein Vorschlag, welcher eine individuelle Regelung des Drucks an den Vorderradbremsen beinhaltet, wobei der geregelte Druck gleichzeitig am diagonal gegenüberliegenden Hinterrad wirksam ist. Dieses System konnte bisher nicht befriedigen.

Durch die EP-A 0 051 801 ist ein Antiblockierregelsystem mit zwei Diagonalbremskreisen, zu denen jeweils zwei Radbremsen gehören, bekannt. Jeder Radbremse ist ein Raddrehungssensor zugeordnet. Jeder Diagonalbremskreis besitzt einen Bremsdruckmodulator, so daß im Blockierschutzfall jeweils in zwei einander diagonal gegenüberliegenden Radbremsen gleichzeitig Bremsdruckabsenkungen durchführbar sind. Ein zugehöriges Steuergerät ist so ausgebildet, daß es ein die kleinste Bremsverzögerungskraft lieferndes Rad erkennt, das beispielsweise bei Kurvenfahrt ein Hinterrad sein kann, und dann die Antiblockierregelung des zugehörigen Diagonalbremskreises nach dem "Select-High-Prinzip" durchführt, während der andere Diagonalbremskreis nach dem "Select-Low-Prinzip" geregelt wird. Eine solche Bremsanlage ist wegen der den Hinterrädern zugeordneten Raddrehungssensoren für Fahrzeuge der unteren Preisklasse zu teuer.

Ein durch die US-A-3 610 362 bekanntes Antiblockierregelsystem hat ein Steuergerät, einen Elektromagnet zum Absenken von Bremsdrücken, einen elektronischen Selbsthaltekreis mit einem eingebauten Unterbrecherschalter für eine Ausrückvorrichtung einer Kupplung, die in einem Antrieb des mit einem solchen Antiblockierregelsystem ausgerüsteten Fahrzeugs angeordnet ist. Beim Auftreten von Blockiergefahr bewirkt das Steuergerät über den Elektromagnet ein Absenken von Bremsdrücken und gleichzeitig über den Selbsthaltekreis ein Auskuppeln der Kupplung. Sobald die Blockiergefahr beseitigt ist, werden die abgesenkten Bremsdrücke erhöht. Der Selbsthaltekreis hält die Kupplung in ausgekuppeltem Zustand. Das Auskuppeln hat den Vorteil, daß von einem Antriebsmotor keine das Wiederbeschleunigen von zu stark abgebremsten Rädern verhindernde Bremsmomente auf diese Räder übertragen werden. Nachteilig ist jedoch, daß jede vom Steuergerät gesteuerte Bremsdruckabsenkung das Auskuppeln der Kupplung zur Folge hat und daß ein Fahrer des Fahrzeugs durch kurzzeitiges manuelles Öffnen des Unterbrecherschalters die Selbsthaltung des Selbsthaltekreises beenden muß, damit die Kupplung wieder einkuppelt.

Durch die US-A-4 262 783 ist ein Fahrzeug bekannt, das eine normale Bremsanlage, einen Antriebsmotor, eine Kupplung, ein Schaltgetriebe und ein Steuergerät aufweist. Die Kupplung und das Schaltgetriebe sind von dem Steuergerät automatisch steuerbar. Beim automatischen Hoch- und Herunterschalter von Gängen wird die Kupplung automatisch ausgekuppelt. Das Steuergerät ist zusätzlich so eingerichtet, daß es die Kupplung löst, wenn das Fahrzeug beispielsweise unter Verwendung der Bremsanlage nahezu zum Stillstand gebracht ist. Das Steuergerät ist außerdem so eingerichtet, daß es beim Bremsen mittels des Bremspedals das Schaltgetriebe so steuert, daß der Antriebsmotor beim Bremsen helfen kann. Das Fahrzeug hat also einen Komfort, der dem von hydraulischen Drehmomentwandlern ausgerüsteten Fahrzeugen ähnlich ist. Weil kein Antiblockierregelsystem in die Bremsanlage eingebaut ist, hängt es von der Geschicklichkeit eines Fahrers ab, im Rahmen von vorgegebenen Straßenverhältnissen den kürzest möglichen Bremsweg zu erreichen und dabei das Fahrzeug auf einer vorbestimmten Fahrspur zu halten.

Der Erfindung liegt die Aufgabe zugrunde, ein einfaches Antiblockierregelsystem der zuerst genannten Art so zu verbessern, daß dessen Nachteile, wie lange Bremswege, mit wenig technischem Aufwand vermieden werden.

Die Aufgabe wird gelöst durch die kennzeichnenden Merkmale des Anspruchs 1.

Das erfindungsgemäße Antiblockierregelsystem für frontgetriebene Fahrzeuge hat den Vorteil, daß während eines Antiblockierregelbetriebs die Bremswirkung des Motors auf die angetriebenen Räder wenigstens verkleinert und nach Verschwinden von Blockiergefahr automatisch wieder hergestellt werden kann, wobei aber zur Verkürzung von Bremswegen die Bremswirkung des Motors nur dann vermindert wird, wenn ein Reibungsbeiwert zwischen Fahrbahn und Rad, ab dem Blockiergefahr entsteht, unterhalb eines vorgewählten Schwellenwertes liegt. Beispielsweise beim Bremsen über Glatteis oder Schnee werden durch Vermindern der Bremswirkung des Motors Bremswege verkürzt, wogegen beim Bremsen auf griffigen Fahrbahnen die Bremswirkung des Motors zum Erreichen kurzer Bremswege in vorteilhafter Weise zur Verfügung steht. Lösungsbeispiele für die Auswerteschaltung und Vorschläge für das Vorwählen eines Schwellenwertes in der Größenordnung von beispielsweise von 0,1 bis 0,5 für den Reibungsbeiwert sind in DE-A1-2 258 317 enthalten. Alternativ kann durch Messen der Bremskraft oder des Bremsdrucks zum Zeitpunkt eines Blockagebeginns oder durch Auswerten einer Druckabbauzeit auf den jeweils erreichten Reibungsbeiwert geschlossen werden.

Die Weiterbildung mit den kennnzeichnenden Merkmalen des Anspruchs 2 verbessert die Bremswirkung zusätzlich.

Nachfolgend ist die Erfindung anhand einer Zeichnung näher beschrieben.

Es zeigen

Fig. 1 ein Ausführungsbeispiel der Erfindung in prinzipieller Darstellung,

Fig. 2 u. 3 zwei Alternativen für die Kupplungsbetätigung.

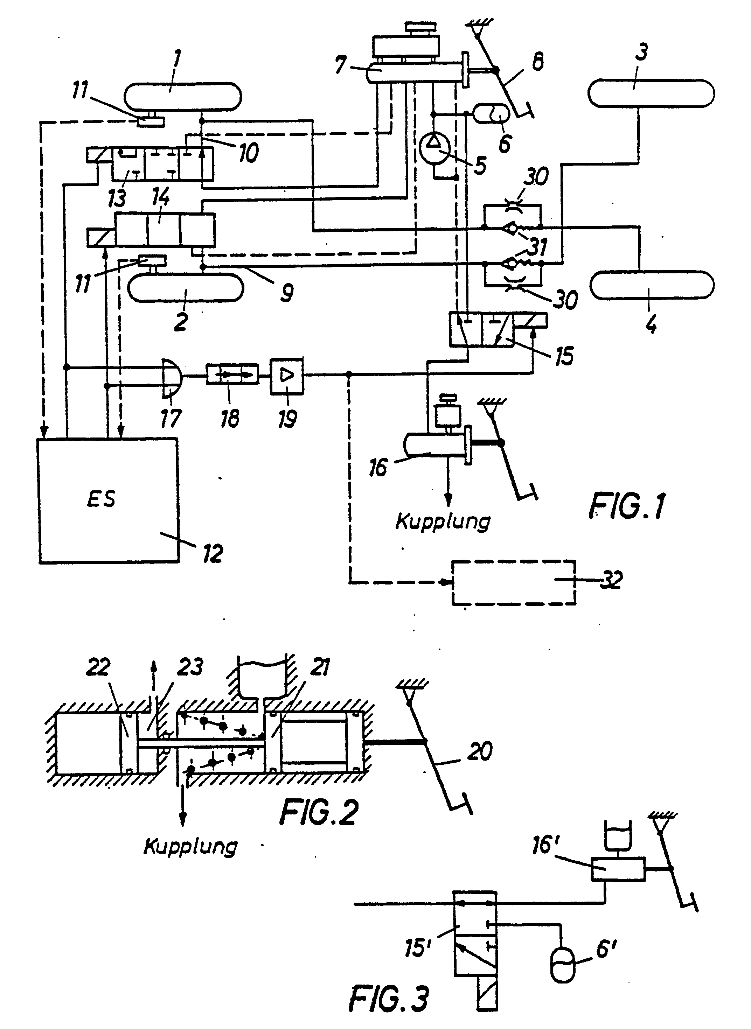

In Fig. 1 sind mit 1 und 2 die angetriebenen Vorderräder eines Fahrzeugs bezeichnet, dessen Hinterräder mit 3 und 4 bezeichnet sind. Die Räder 1 und 4 bzw. 2 und 3 liegen jeweils in einem Bremskreis. Das Bremssystem des Fahrzeugs besteht aus einer Druckquelle, enthaltend eine Pumpe 5 und einen Druckspeicher 6 sowie aus einer damit verbundenen Bremsdrucksteuereinheit 7, die bei Betätigung des Pedals 8 Druck in den angeschlossenen Bremskreisen 9 und 10 erzeugt.

Das Antiblockierregelsystem des Fahrzeugs besteht aus zwei den Vorderrädern 1 und 2 zugeordneten Meßwertgebern 11, der elektrischen Auswerteschaltung 12 und zwei Dreistellungsventilen 13 und 14, mit denen der Druck in den beiden Bremskreisen 9 und 10 individuell gemäß dem Verhalten des einbezogenen Vorderrads geregelt wird.

An die Druckquelle 5/6 ist über ein Zweistellungsventil 15 ein Hilfszylinder der speziell ausgebildeten Kupplungsbetätigungsvorrichtung 16 des Fahrzeugs angeschaltet. Fig. 2 zeigt die mögliche Ausbildung einer solchen Betätigungsvorrichtung. Dort ist das Kupplungspedal mit 20, ein üblicher Kupplungskolben mit 21 und ein Hilfskolben mit 22 bezeichnet. Der Kupplungskolben 21 kann über das Pedal 20 aber auch durch Einsteuern von Druck mittels des Ventils 15 in der Kammer 23 verschoben und damit die Kupplung betätigt werden.

Die Ansteuerung des Ventils 15 wird hier bei Auftreten eines Ansteuersignals für die Ventile 13 und/oder 14 über ein Oder-Gatter 17 ausgelöst.

Ein Zeitglied 18, das das ankommende Steuersignal um eine Zeit (z.B. 50 msec) verzögert, bewirkt, daß kurze Ventilsteuersignale die Kupplungsbetätigung nicht auslösen können. Ausserdem bewirkt dieses Zeitglied 18, daß das Ventil 15 am Ende eines Ventilansteuersignals noch eine Zeit (z.B. 100 msec) betätigt bleibt. Über den Leistungsverstärker 19 gelangt das Ausgangssignal des Zeitglieds 18 zum Ventil 15 und betätigt dieses. Damit wird im gezeigten Ausführungsbeispiel kurz nach Auftreten einer Blockierneigung das Ventil 15 und damit die Kupplung betätigt und diese Betätigung bleibt bis kurz nach Ende der Blockiergefahr bestehen, d.h., während der gesamten Zeit ist das Motorschleppmoment unwirksam gemacht.

In die Bremsleitungen zu den Hinterrädern sind noch Kombinationen von Drosseln 30 und Rückschlagventilen 31 eingeschaltet, die für einen schnellen Druckaufbau, aber einen verlangsamten Druckabbau an den Hinterradbremsen verantwortlich sind. Dieser verzögerte Abbau kommt der Abbremsung zugute.

In Fig. 3 ist gezeigt, daß man auf einen zusätzlichen Kupplungszylinder entsprechend Fig. 2 verzichten kann, wenn man mittels des Ventils 15' alternativ den üblichen Kupplungszylinder 16' oder die Druckquelle 6' mit der Kupplung verbindet.

Bei Vorhandensein eines Automatikgetriebes 32 wird das Ausgangssignal des Verstärkers 19 diesem zur Umschaltung zugeführt. Dies ist in Fig. 1 gestrichelt angedeutet

## Patentansprüche

1. Antiblockierregelsystem für frontgetriebene Fahrzeuge mit einer Bremskreisaufteilung, bei der je ein Vorder- und ein Hinterrad in einen Bremskreis einbezogen sind, bei welchem Antiblockierregelsystem lediglich den Vorderrädern Meßwertgeber zur Überwachung des Radbewegungsverhaltens zugeordnet sind und bei dem durch eine Auswerteschaltung, der die Signale der Meßwertgeber zugeführt werden, der Bremsdruck in den beiden Bremskreisen individuell in Abhängigkeit vom Radverhalten des zugehörigen Vorderrads geregelt wird, dadurch gekennzeichnet, daß von der Auswerteschaltung (12) ansteuerbare Beeinflussungsmittel (5, 6, 15) vorgesehen sind, die zumindest zeitweise während der Antiblockierregelung die Bremswirkung des Motors auf die angetriebenen Räder (1, 4 bzw. 2, 3) wenigstens verkleinern, und daß die Auswerteschaltung (12) derart eingerichtet ist, daß die Ansteuerung der Beeinflussungsmittel (5, 6, 15) nur erfolgt, wenn das Radverhalten das Unterschreiten eines vorgewählten Reibungsschwellenwertes oder eines vorgewählten Bremskraftschwellenwertes signalisiert, und daß nach Beendigung von Blockiergefahr die Beeinflussungsmittel (5, 6, 15) automatisch in ihre Ausgangsstellungen zurückkehren.

2. Antiblockierregelsystem nach Anspruch 1, dadurch gekennzeichnet, daß in die Bremsleitungen zu den Hinterrädern (3, 4) je eine Drossel (30) und ein diese überbrückendes und eine schnelle Druckerhöhung an den Hinterradbremsen zulassendes Einrichtungsventil (31) eingeschaltet ist.

**Claims**

1. Antiblock control system for front-wheel driven vehicles with a brake circuit sectioning in which one front wheel and one rear wheel are each included in one brake circuit, in which antiblock control system measurement transducers for monitoring the wheel movement behaviour are assigned only to the front wheels and in which an evaluation circuit, to which the signals of the measurement transducer are fed, is used to control the brake pressure in the two brake circuits individually dependent on the wheel behaviour of the associated front wheel, characterized in that influencing means (5, 6, 15), which can be actuated by the evaluation circuit (12), are provided and at least reduce the braking effect of the motor on the driven wheels (1, 4 and 2, 3) at least temporarily during the antiblock control, and in that the evaluation circuit (12) is designed such that the actuation of the influencing means (5, 6, 15) only takes place if the wheel behaviour signals the undershooting of a preselected friction threshold or a preselected braking power threshold, and in that the influencing means (5, 6, 15) automatically return to their initial positions after the danger of blocking is over.

2. Antiblock control system according to Claim 1, characterized in that a throttle (30) and a unidirectional valve (31), bridging the throttle and allowing a rapid pressure increase at the rear wheel brakes, are connected into each of the brake lines to the rear wheels (3, 4).

**Revendications**

1. Système de réglage anti-blocage pour des véhicules entraînés frontalement, avec une répartition de circuit de freinage dans laquelle une roue avant et une roue arrière sont respectivement intégrées dans un circuit de freinage, système de réglage anti-blocage dans lequel des émetteurs de valeurs de mesure pour surveiller le comportement de déplacement des roues sont uniquement associés aux roues avant, et dans lequel, grâce à un circuit d'exploitation auquel sont appliqués les signaux des émetteurs de valeur de mesure, la pression de freinage est réglée individuellement dans les deux circuits de freinage en fonction du comportement de la roue avant associée à chacun de ces circuits, système de réglage anti-blocage caractérisé en ce qu'il est prévu des moyens d'influence (5, 6, 15) susceptibles d'être commandés par le circuit d'exploitation (12), et qui diminue au moins temporairement pendant la régulation anti-blocage l'effet de freinage du moteur sur les roues entraînées (1, 4 ou bien 2, 3), le circuit d'exploitation (12) étant organisé de façon que la commande des moyens d'influence (5, 6, 15) ne s'effectue que lorsque le comportement des roues signale le franchissement vers le bas d'une valeur de seuil présélectionnée de l'adhérence, ou bien d'une valeur de seuil pré-sélectionnée de l'effort de freinage, et qu'après la disparition du risque de blocage, les moyens d'influence (5, 6, 15) reviennent automatiquement dans leur position de départ.

2. Système de réglage anti-blocage selon la revendication 1, caractérisé en ce qu'un étranglement (30) et une vanne uni-directionnelle (31), shuntant cet étranglement et permettant d'élever rapidement la pression sur le frein de la roue arrière, sont insérés sur chacune des canalisations de freinage aboutissant aux roues arrière (3, 4).

0 106 112

FIG.1

FIG.2

Kupplung

FIG.3

ES

Kupplung